# EUROPEAN PATENT APPLICATION

(11) **EP 4 835 006 A1**
(43) Date of publication of application: **04.11.2026**
(21) Application number: 24913060.0
(22) Date of filing: 26.12.2024
(51) Int. Cl.: C08L 97/00, B27K 3/52, B27N 3/08, C08G 69/28, C08L 101/02

(54) **WOODY RESIN COMPOSITION FOR FLUIDIZATION MOLDING, METHOD FOR PRODUCING SAME, AND WOODY MOLDED PRODUCT**

(30) Priority: 27.12.2023 JP 2023221670
(71) Applicant: ASAHI KASEI KABUSHIKI KAISHA, Tokyo 100-0006 (JP); National Institute of Advanced Industrial Science and Technology, Chiyoda-ku Tokyo 100-8921 (JP)
(72) Inventor: NAKASHIMA, Masashi, Tokyo 100-0006 (JP); MIYOSHI, Takaaki, Tokyo 100-0006 (JP); TAKEI, Toru, Tokyo 100-0006 (JP); YOSHINO, Nana, Tokyo 100-0006 (JP); SEKI, Masako, Tsukuba-shi, Ibaraki 305-8560 (JP); ABE, Mitsuru, Tsukuba-shi, Ibaraki 305-8560 (JP); MIKI, Tsunehisa, Tsukuba-shi, Ibaraki 305-8560 (JP)
(74) Representative: Hoffmann Eitle
(86) International application number: PCT/JP2024/046288
(87) International publication number: WO 2025/143174

(57) **Abstract**

The object is to provide a woody resin composition for flow forming with which it is possible to produce a woody shaped product having high commercial producibility and excellent water resistance, a method of producing the same, and a woody shaped product having high commercial producibility and excellent water resistance. A woody resin composition for flow forming contains a woody material and a thermoplastic resin, wherein the woody resin composition for flow forming has at least one shape selected from the group consisting of a sheet shape, a fiber shape, a pillar shape, and a spherical shape, content of the woody material is not less than 50 mass% and less than 95 mass% and content of the thermoplastic resin is more than 5 mass% and not more than 50 mass% relative to total mass of the woody resin composition for flow forming, the thermoplastic resin has, in a main chain skeleton of a repeating unit, at least one bond selected from the group consisting of an amide bond, an ester bond, an ether bond, and a thioether bond or has at least one end group selected from the group consisting of a carbonyl group, an acid anhydride group, an amide group, and a hydroxy group, the thermoplastic resin is present in a cell wall and/or cell lumen of the woody material, and the thermoplastic resin remains in a cell wall and/or cell lumen of the woody material even after extraction using a solvent that can dissolve the thermoplastic resin.

## Description

### TECHNICAL FIELD

The present disclosure relates to a woody resin composition for flow forming, a method of producing the same, and a woody shaped product obtained through shaping of a woody resin composition for flow forming.

### BACKGROUND

In recent years, against the backdrop of a problem of depletion of underground resources, much effort has been focused on the development of techniques enabling a high level of exploitation of biomass resources such as wood. In particular, the creation of component materials having a biomass resource that can be used sustainably as a raw material and also having performance of at least a similar level to metal and plastic products is an important and urgent issue for the world.

The use of wood and component materials containing a high proportion of wood is considered promising as a forest carbon sink measure. Going forward, there is demand for techniques of treating and processing wood in order that wood can be used not only in construction, but also in a wide range of applications, and particularly as an industrial material.

In the process of researching fundamental physical properties of biomass materials such as wood, the inventors discovered that wood can flow and deform while remaining a solid under specific temperature and pressure conditions and have been developing a technique of wood flow forming that exploits this phenomenon (for example, refer to Patent Literature (PTL) 1). Wood flow forming is a technique in which a woody material in a bulk form is accommodated inside of a freely selected mold, and then pressure is applied so as to cause the woody material to flow and fill the inside of the mold, thereby shaping the woody material. Compared to a method in which a woody material is densified through lumen occlusion of wood cells, such as by compression processing, in order to impart a change of shape, wood flow forming imparts deformation due to a change in position of wood cells through a phenomenon of slippage between wood cells, and hence can cause a greater degree of deformation. Moreover, flow forming enables the realization of plastic processing of woody materials of any shape, which was not conventionally possible through just compression processing, and can suppress damage to wood cells having a fibrous form, which makes it possible to impart a reinforcing effect on an obtained woody shaped product.

Furthermore, wood materials where a resin is impregnated into a woody material are being developed with the aim of imparting even higher flow formability to woody materials so as to enable adoption in production of shaped products having more complex shapes.

As one example, PTL 2 discloses a shaped product obtained through lateral extrusion molding of a thermoplastic woody material obtained by impregnating and polymerizing a methyl methacrylate (MMA) resin monomer in a woody material. PTL 2 reports that this thermoplastic woody material enables flow inside of and between cellular tissues in a woody material and re-adhesion after flow, is easy to reshape or recycle, and can provide a woody material with flow formability through cell wall deformation and intercellular layer delamination so as to shape a material formed of the woody material into complex shapes and also with shape retention at a cellular level through a thermoplastic resin.

As another example, PTL 3 discloses a woody shaped product obtained through backward extrusion molding of a woody material for flow forming obtained by impregnating a polyethylene glycol aqueous solution or a water-soluble urethane resin into a woody material and reports that this woody shaped product has a woody external appearance and excellent shape stability.

As yet another example, PTL 4 discloses an acoustic diaphragm obtained through single-axis pressing of a woody material obtained by impregnating a water-soluble phenolic resin into a woody material and reports that this acoustic diaphragm satisfies characteristics that are required of a material used in an acoustic diaphragm (thin wall thickness, high specific modulus, appropriate sound propagation velocity, high internal loss, lack of denaturing due to change of humidity or the like, high durability, etc.).

### CITATION LIST

### Patent Literature

PTL 1: JP 2010-155394 A
PTL 2: JP 2014-166711 A
PTL 3: WO 2022/004796 A1
PTL 4: JP 2015-095819 A

### SUMMARY

### (Technical Problem)

However, the thermoplastic woody material disclosed in PTL 2 requires the use of a solvent other than water in production of a woody resin composition and suffers from an issue of low commercial producibility from a perspective of necessitating equipment for solvent recovery.

Moreover, the woody shaped products disclosed in PTL 3 and 4 each contain a resin that is water soluble, which means that the shaped product may collapse upon coming into contact with water, and thus water resistance is an issue for these woody shaped products.

The present disclosure is made in light of the circumstances set forth above and has an object of providing a woody resin composition for flow forming with which it is possible to produce a woody shaped product having high commercial producibility and excellent water resistance, a method of producing the same, and a woody shaped product having high commercial producibility and excellent water resistance.

### (Solution to Problem)

Specifically, the present disclosure is inclusive of the following forms.
[1] A woody resin composition for flow forming comprising a woody material and a thermoplastic resin, wherein
   the woody resin composition for flow forming has at least one shape selected from the group consisting of a sheet shape, a fiber shape, a pillar shape, and a spherical shape,
   content of the woody material is not less than 50 mass% and less than 95 mass% and content of the thermoplastic resin is more than 5 mass% and not more than 50 mass% relative to total mass of the woody resin composition for flow forming,
   the thermoplastic resin has, in a main chain skeleton of a repeating unit, at least one bond selected from the group consisting of an amide bond, an ester bond, an ether bond, and a thioether bond or has at least one end group selected from the group consisting of a carbonyl group, an acid anhydride group, an amide group, and a hydroxy group,
   the thermoplastic resin is present in either or both of a wood cell wall and a wood cell lumen of the woody material in the woody resin composition for flow forming, and
   the thermoplastic resin remains in either or both of a wood cell wall and a wood cell lumen of the woody material even after the woody resin composition for flow forming is subjected to extraction using a solvent that can dissolve the thermoplastic resin.
[2] The woody resin composition for flow forming according to [1], wherein the thermoplastic resin includes at least one resin selected from the group consisting of a polyamide, a polyoxymethylene, a polyester, a polypropylene, a polyphenylene ether, and a polyarylene sulfide.
[3] The woody resin composition for flow forming according to [1] or [2], wherein the thermoplastic resin includes a polyamide.
[4] The woody resin composition for flow forming according to any one of [1] to [3], wherein the thermoplastic resin includes an amorphous polyamide.
[5] The woody resin composition for flow forming according to any one of [1] to [4], wherein the woody material has a fiber shape with a fiber diameter D of 3.0 mm or less and a ratio L/D of fiber length L relative to the fiber diameter D of 3 or more.
[6] The woody resin composition for flow forming according to any one of [1] to [5], further comprising 1 mass% or more of water relative to the total mass of the woody resin composition for flow forming.
[7] The woody resin composition for flow forming according to any one of [1] to [6], wherein the woody material has a lignin content ratio of 3 mass% or more.
[8] A method of producing a woody resin composition for flow forming comprising:
   an impregnation step of bringing a thermoplastic resin monomer into contact with a woody material and impregnating the thermoplastic resin monomer into the woody material; and
   a polymerization step of polymerizing the thermoplastic resin monomer that has been impregnated into the woody material and synthesizing a thermoplastic resin, wherein
   the woody resin composition for flow forming that is obtained has at least one shape selected from the group consisting of a sheet shape, a fiber shape, a pillar shape, and a spherical shape,
   content of the woody material is not less than 50 mass% and less than 95 mass% and content of the thermoplastic resin is more than 5 mass% and not more than 50 mass% relative to total mass of the woody resin composition for flow forming,
   the thermoplastic resin has, in a main chain skeleton of a repeating unit, at least one bond selected from the group consisting of an amide bond, an ester bond, an ether bond, and a thioether bond or has at least one end group selected from the group consisting of a carbonyl group, an acid anhydride group, an amide group, and a hydroxy group,
   the thermoplastic resin is present in either or both of a wood cell wall and a wood cell lumen of the woody material in the woody resin composition for flow forming, and
   the thermoplastic resin remains in either or both of a wood cell wall and a wood cell lumen of the woody material even after the woody resin composition for flow forming is subjected to extraction using a solvent that can dissolve the thermoplastic resin.
[9] The method of producing a woody resin composition for flow forming according to [8], further comprising an adjustment step of adjusting lignin content in the woody material before the impregnation step.
[10] The method of producing a woody resin composition for flow forming according to [9], further comprising a moisturizing step of bringing the woody material into contact with water before the impregnation step, but after the adjustment step.
[11] The method of producing a woody resin composition for flow forming according to any one of [8] to [10], wherein the thermoplastic resin includes at least one resin selected from the group consisting of a polyamide, a polyoxymethylene, a polyester, a polypropylene, a polyphenylene ether, and a polyarylene sulfide.
[12] The method of producing a woody resin composition for flow forming according to any one of [8] to [11], wherein the thermoplastic resin includes a polyamide.
[13] The method of producing a woody resin composition for flow forming according to any one of [8] to [12], wherein the thermoplastic resin includes an amorphous polyamide.
[14] The method of producing a woody resin composition for flow forming according to any one of [8] to [13], wherein the woody material has a fiber shape with a fiber diameter D of 3.0 mm or less and a ratio L/D of fiber length L relative to the fiber diameter D of 3 or more.
[15] The method of producing a woody resin composition for flow forming according to any one of [8] to [14], wherein the woody resin composition for flow forming further contains 1 mass% or more of water relative to the total mass of the woody resin composition for flow forming.
[16] The method of producing a woody resin composition for flow forming according to any one of [8] to [15], wherein the woody material has a lignin content ratio of 3 mass% or more.
[17] A woody shaped product obtained through shaping of a woody resin composition for flow forming that contains a woody material and a thermoplastic resin, wherein
   content of the woody material is not less than 50 mass% and less than 95 mass% and content of the thermoplastic resin is more than 5 mass% and not more than 50 mass% relative to total mass of the woody shaped product,
   the thermoplastic resin has, in a main chain skeleton of a repeating unit, at least one bond selected from the group consisting of an amide bond, an ester bond, an ether bond, and a thioether bond or has at least one end group selected from the group consisting of a carbonyl group, an acid anhydride group, an amide group, and a hydroxy group,
   the thermoplastic resin is present in either or both of a wood cell wall and a wood cell lumen of the woody material in the woody shaped product, and
   the thermoplastic resin remains in either or both of a wood cell wall and a wood cell lumen of the woody material even after the woody shaped product is subjected to extraction using a solvent that can dissolve the thermoplastic resin.
[18] The woody shaped product according to [17], wherein the woody shaped product is obtained through injection molding of the woody resin composition for flow forming.
[19] The woody shaped product according to [18], wherein the woody shaped product is obtained through press forming of the woody resin composition for flow forming.

### (Advantageous Effect)

According to the present disclosure, it is possible to provide a woody resin composition for flow forming with which it is possible to produce a woody shaped product having high commercial producibility and excellent water resistance, a method of producing the same, and a shaped product having high commercial producibility and excellent water resistance.

### BRIEF DESCRIPTION OF THE DRAWINGS

In the accompanying drawings:

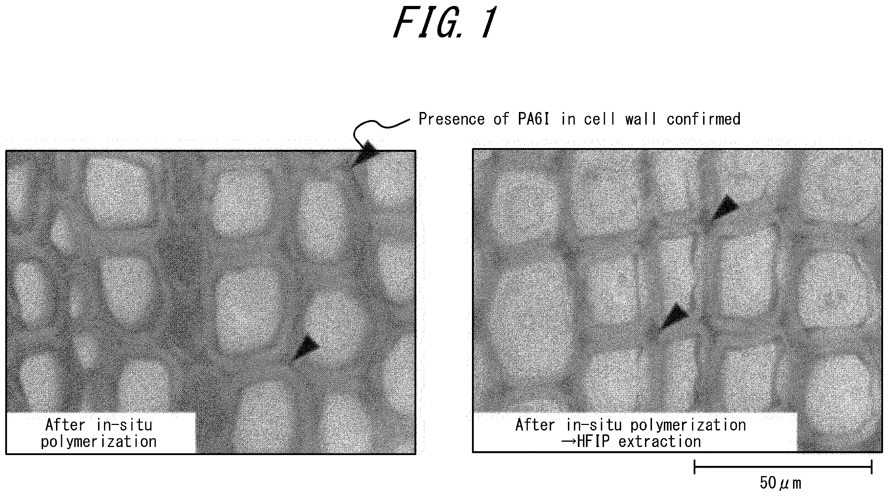

FIG. 1 presents photographs of a cross-section of a woody resin composition for flow forming of Example 1 as observed using an optical microscope, where the left side is a photograph before solvent extraction and the right side is a photograph after solvent extraction.

### DETAILED DESCRIPTION

The following provides a detailed description of an embodiment of the present disclosure (hereinafter, referred to simply as the "present embodiment"). The present embodiment described below is an example for describing the present disclosure and is not intended to limit the present disclosure to the following matter. The present disclosure can be implemented with appropriate modifications that are within the scope of the essence thereof.

### <Woody resin composition for flow forming>

A woody resin composition for flow forming (hereinafter, also referred to simply as a "woody resin composition") of the present embodiment contains a woody material and a thermoplastic resin.

The shape of the woody resin composition for flow forming is at least one selected from the group consisting of a sheet shape, a fiber shape, a pillar shape, and a spherical shape.

Although no specific limitations are placed on the size of the woody resin composition for flow forming, in a case in which flow forming is to be performed by injection molding, for example, the maximum length of the woody resin composition for flow forming is preferably not less than 1 mm and not more than 30 mm, more preferably not less than 2 mm and not more than 25 mm, and even more preferably not less than 3 mm and not more than 10 mm from a viewpoint of easily obtaining a woody shaped product having excellent shape stability. Moreover, in a case in which flow forming is to be performed by press forming, the size of the woody resin composition for flow forming should be set as appropriate depending on the desired size of a woody shaped product, and the maximum length may be not less than 1 mm and not more than 30 mm, for example.

The following provides a detailed description of constituent components of the woody resin composition for flow forming of the present embodiment.

### [Woody material]

The woody material that is contained in the woody resin composition for flow forming of the present embodiment is a material originating from the body of a plant having cell walls such as wood (a conifer such as Japanese ceder, Japanese cypress, or pine; or a broadleaf tree such as poplar, Japanese beech, oak, or birch), bamboo, natural plant fibers (jute, kenaf, linen, hemp, ramie, sisal, etc.), or a herbaceous plant and may be the plant body itself (sawn sheet, veneer, sliced veneer, etc.), a waste material thereof, or a chemically treated product of any of these materials.

The shape of the woody material may be set as appropriate according to the desired shape of the woody resin composition for flow forming without any specific limitations and may be a regular shape such as a sheet shape, a fiber shape, a pillar shape, or a spherical shape or may be an irregular shape.

The size of the woody material may be set as appropriate according to the desired size of the woody resin composition for flow forming without any specific limitations. For example, in a case in which flow forming is to be performed by injection molding or press forming, a shape including fibers of 5 mm or more in length is preferable from a viewpoint of easily obtaining a woody shaped product having excellent shape stability since the woody resin composition for flow forming is accommodated and shaped inside of a mold.

Moreover, in a case in which the woody material is fibers, it is preferable that the fiber diameter D is 3.0 mm or less and a ratio L/D of the fiber length L relative to the fiber diameter D is 3 or more. When the fiber diameter D and L/D are within the ranges set forth above, the resin composition has a stable shape and tends to have good plasticizability and handling during shaping processing.

The woody material is preferably a material that has undergone adjustment of lignin content in the woody material through delignification treatment. It is not necessarily the case that a lower lignin content ratio is better, and the lignin content ratio is preferably 3 mass% or more, more preferably 5 mass% or more, even more preferably 7 mass% or more, and may be 20 mass% or more. In a case in which the lignin content ratio is 20 mass% or more, mechanical characteristics of an obtained woody shaped product are of a similar level to in a case in which an untreated woody material is used, but since fluidity of the woody material is excellent, a greater degree of deformation can be imparted than with an untreated woody material, and a woody resin composition for flow forming with excellent woody shaped product producibility can be provided. Note that the term "fluidity" as used in the present specification refers to positional change through a phenomenon of slippage between wood cells.

Moreover, in a case in which the lignin content ratio is not less than 3 mass% and not more than 15 mass%, mechanical characteristics of an obtained shaped product are significantly improved as compared to with an untreated woody material, and a shaping material with excellent woody shaped product producibility can be provided. Although the upper limit for the lignin content ratio is preferably 15 mass% from a viewpoint of mechanical characteristics of an obtained shaped product, in a situation in which mechanical characteristics of a similar level to those with an untreated woody material are acceptable, the lignin content ratio may exceed 15 mass% and normally corresponds to the content ratio of the woody material before delignification treatment. Note that since the lignin content ratio varies depending on the type of woody material, differences in growth environment, and differences in position within the same individual, it is not possible to specify a uniform upper limit as a specific numerical value.

The lignin content ratio can be measured by the acetyl bromide method. The acetyl bromide method is a procedure in which a powdered woody material is dissolved in an acetic acid solution of acetyl bromide and the amount of eluted lignin is calculated in terms of ultraviolet absorbance (refer to K. Iiyama et al. "An improved acetyl bromide procedure for determining lignin in woods and wood pulps", Wood Science and Technology, 1988, 22: pp. 271-280).

When a woody material undergoes the delignification treatment described above, the degree of condensation of lignin decreases, and a relaxed state is created inside of cell walls. Accordingly, a woody material that is obtained in this manner can further improve slippage between wood cells in the woody material during flow forming as compared to a wood material obtained by a method in which water is added to an untreated plant body or a method in which strain is imparted to an untreated plant body in order to relax bonds between macromolecule chains in hemicellulose and lignin, which are amorphous macromolecules, and cause the expression of fluidity such as in a method described in JP 2006-247974 A, for example. Moreover, it is possible to provide a woody resin composition for flow forming having even better woody shaped product producibility.

The content of the woody material in the woody resin composition for flow forming is not less than 50 mass% and less than 95 mass%, preferably not less than 50 mass% and not more than 90 mass%, and more preferably not less than 50 mass% and not more than 80 mass% relative to the total mass of the woody resin composition for flow forming.

When the content of the woody material is within any of the ranges set forth above, not only does the woody resin composition for flow forming have a high ratio of bio-derived components and be able to make an environmental contribution, the woody resin composition for flow forming can also flow through an effect of improving fluidity of the woody material itself through heat or the like rather than flowing through fluidity of a resin as in a conventional composition and can impart a high level of woody external appearance to an obtained woody shaped product.

### [Thermoplastic resin]

The thermoplastic resin that is contained in the woody resin composition for flow forming of the present embodiment has, in a main chain skeleton of a repeating unit, at least one bond selected from the group consisting of an amide bond, an ester bond, an ether bond, and a thioether bond or has at least one end group selected from the group consisting of a carbonyl group, an acid anhydride group, an amide group, and a hydroxy group.

The thermoplastic resin may be one type of thermoplastic resin or may be a combination of two or more types of thermoplastic resins.

The content of the thermoplastic resin in the woody resin composition for flow forming is more than 5 mass% and not more than 50 mass%, preferably not less than 10 mass% and not more than 50 mass%, and more preferably not less than 20 mass% and not more than 50 mass% relative to the total mass of the woody resin composition for flow forming.

By setting the content of the thermoplastic resin within any of the ranges set forth above, it is possible to reduce the contribution of the thermoplastic resin to fluidity of the woody resin composition for flow forming and to impart a highly woody external appearance to an obtained woody shaped product.

Specific examples of such thermoplastic resins include a polyamide, a polyoxymethylene, a polyester, a polypropylene, a polyphenylene ether, a polyarylene sulfide, and so forth, but are not limited thereto. Of these thermoplastic resins, a polyamide is preferable, and an amorphous polyamide is more preferable.

A polyamide has excellent heat resistance and mechanical strength and also has a feature of high affinity with the woody material as a result of having hydrogen bonds in its molecular structure. Moreover, when an amorphous polyamide that does not have a crystalline layer is used, the resin can infiltrate into finer regions inside of cell walls of the woody material, which tends to result in a higher content ratio of the woody material in the woody resin composition for flow forming.

Note that the term "polyamide" as used in the present specification refers to a polymer having an amide (-NHCO-) group in a main chain.

Moreover, the term "amorphous polyamide" as used in the present specification refers to a polyamide having a crystallization enthalpy ΔH of 15 J/g or less as measured by a differential scanning calorimeter at 20°C/min. The crystallization enthalpy of the amorphous polyamide is preferably 10 J/g or less, more preferably 5 J/g or less, and even more preferably 0 J/g.

On the other hand, the term "crystalline polyamide" refers to a polyamide having a crystal heat of fusion of 4 J/g or more as measured by a differential scanning calorimeter at 20°C/min.

Note that the crystallization enthalpy ΔH and the crystal heat of fusion can be measured in accordance with JIS-K7121 using a measurement instrument such as a Diamond-DSC produced by Perkin-Elmer, Inc., for example.

The amorphous polyamide is not specifically limited so long as it is a polyamide having a crystallization enthalpy ΔH of not more than the upper limit set forth above, but may be a semi-aromatic polyamide, for example.

In a case in which the amorphous polyamide is a semi-aromatic polyamide, the amorphous polyamide is preferably a polyamide that includes diamine units and dicarboxylic acid units.

The amorphous polyamide is preferably a polyamide that includes dicarboxylic acid units among which isophthalic acid units are included in a proportion of at least 50 mol% and diamine units among which diamine units having a carbon number of not less than 4 and not more than 10 are included in a proportion of at least 50 mol%.

The total content of the isophthalic acid units and the diamine units having a carbon number of not less than 4 and not more than 10 is preferably not less than 75 mol% and not more than 100 mol%, more preferably not less than 90 mol% and not more than 100 mol%, and even more preferably 100 mol% relative to the total amount of all constitutional units of the amorphous polyamide.

Note that the proportion constituted by a specific monomer unit forming the amorphous polyamide referred to in the present specification can be measured by nuclear magnetic resonance spectroscopy (NMR) or the like.

Among the dicarboxylic acid units, the content of isophthalic acid units relative to the total molar amount of dicarboxylic acid units is preferably 50 mol% or more, more preferably not less than 75 mol% and not more than 100 mol%, even more preferably not less than 90 mol% and not more than 100 mol%, and particularly preferably 100 mol%.

When the content of isophthalic acid units relative to the total number of moles of dicarboxylic acid is not less than any of the lower limits set forth above, this tends to result in a polyamide having more satisfactory mechanical properties, formability, surface appearance, and so forth.

The dicarboxylic acid units may include an aromatic dicarboxylic acid unit other than an isophthalic acid unit, an aliphatic dicarboxylic acid unit, and/or an alicyclic dicarboxylic acid unit.

The inclusion of an aromatic dicarboxylic acid unit as a dicarboxylic acid unit other than an isophthalic acid unit is preferable, and the inclusion of an aromatic dicarboxylic acid having a carbon number of not less than 6 and not more than 12 as a dicarboxylic acid unit other than an isophthalic acid unit is more preferable.

Examples of aromatic dicarboxylic acids that may form the aromatic dicarboxylic acid unit other than an isophthalic acid unit include, but are limited to, dicarboxylic acids that have a phenyl group or a naphthyl group. An aromatic group of the aromatic dicarboxylic acid may be substituted or unsubstituted.

Examples of possible substituents include, but are not specifically limited to, alkyl groups having a carbon number of not less than 1 and not more than 4, aryl groups having a carbon number of not less than 6 and not more than 10, arylalkyl groups having a carbon number of not less than 7 and not more than 10, halogen groups such as a chloro group and a bromo group, silyl groups having a carbon number of not less than 1 and not more than 6, and a sulfonic acid group and salts thereof (sodium salt, etc.).

Specific examples of aromatic dicarboxylic acids that may form the aromatic dicarboxylic acid unit include, but are not limited to, aromatic dicarboxylic acids having a carbon number of not less than 8 and not more than 20 that are unsubstituted or substituted with a specific substituent such as terephthalic acid, naphthalene dicarboxylic acid, 2-chloroterephthalic acid, 2-methylterephthalic acid, 5-methylisophthalic acid, and sodium 5-sulfoisophthalate. Of these aromatic dicarboxylic acids, terephthalic acid is preferable.

The aromatic dicarboxylic acid forming the aromatic dicarboxylic acid unit may be one type of aromatic dicarboxylic acid or may be a combination of two or more types of aromatic dicarboxylic acids.

Examples of aliphatic dicarboxylic acids that may form the aliphatic dicarboxylic acid unit include, but are not limited to, linear or branched saturated aliphatic dicarboxylic acids having a carbon number of not less than 3 and not more than 20 such as malonic acid, dimethylmalonic acid, succinic acid, 2,2-dimethylsuccinic acid, 2,3-dimethylglutaric acid, 2,2-diethylsuccinic acid, 2,3-diethylglutaric acid, glutaric acid, 2,2-dimethylglutaric acid, adipic acid, 2-methyladipic acid, trimethyladipic acid, pimelic acid, suberic acid, azelaic acid, sebacic acid, dodecanedioic acid, tetradecanedioic acid, hexadecanedioic acid, octadecanedioic acid, icosanedioic acid, and diglycolic acid.

Note that the aliphatic dicarboxylic acid forming the aliphatic dicarboxylic acid unit may be one type of aliphatic dicarboxylic acid or may be a combination of two or more types of aliphatic dicarboxylic acids.

Examples of alicyclic dicarboxylic acids that may form the alicyclic dicarboxylic acid unit include, but are not limited to, alicyclic dicarboxylic acids in which the carbon number of an alicyclic structure is not less than 3 and not more than 10, with alicyclic dicarboxylic acids in which the carbon number of an alicyclic structure is not less than 5 and not more than 10 being preferable.

Examples of such alicyclic dicarboxylic acids include, but are not limited to, 1,4-cyclohexanedicarboxylic acid, 1,3-cyclohexanedicarboxylic acid, and 1,3-cyclopentanedicarboxylic acid. Of these alicyclic dicarboxylic acids, 1,4-cyclohexanedicarboxylic acid is preferable.

An alicyclic group of the alicyclic dicarboxylic acid may be substituted or unsubstituted. Examples of possible substituents include, but are not limited to, alkyl groups having a carbon number of not less than 1 and not more than 4 such as a methyl group, an ethyl group, an n-propyl group, an isopropyl group, an n-butyl group, an isobutyl group, and a tert-butyl group.

Note that the alicyclic dicarboxylic acid forming the alicyclic dicarboxylic acid unit may be one type of alicyclic dicarboxylic acid or may be a combination of two or more types of alicyclic dicarboxylic acids.

The inclusion of dicarboxylic acid units such as described above tends to result in even better mechanical properties, fluidity, surface appearance, and so forth of the amorphous polyamide.

Note that the dicarboxylic acid units may be one type of dicarboxylic acid unit or may be a combination of two or more types of dicarboxylic acid units.

Dicarboxylic acids that may form a dicarboxylic acid unit in the amorphous polyamide are not limited to the compounds described above as dicarboxylic acids, and compounds equivalent to the dicarboxylic acids described above may also be used.

The term "compound equivalent to a dicarboxylic acid" as used here means a compound that can form the same dicarboxylic acid structure as a dicarboxylic acid structure derived from a dicarboxylic acid described above. Examples of such compounds include, but are not limited to, anhydrides and halides of dicarboxylic acids.

Moreover, the amorphous polyamide may further include a unit derived from a trivalent or higher polyvalent carboxylic acid such as trimellitic acid, trimesic acid, or pyromellitic acid as necessary.

The trivalent or higher polyvalent carboxylic acid may be one type of polyvalent carboxylic acid or may be a combination of two or more types of polyvalent carboxylic acids.

The constituent diamine units of the amorphous polyamide preferably include diamine units having a carbon number of not less than 4 and not more than 10 in a proportion of at least 50 mol%. Examples of the diamine units include, but are not limited to, an aliphatic diamine unit, an alicyclic diamine unit, and an aromatic diamine unit.

Examples of aliphatic diamines that may form the aliphatic diamine unit include, but are not limited to, linear saturated aliphatic diamines having a carbon number of not less than 2 and not more than 20 such as ethylenediamine, propylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, and tridecamethylenediamine.

Note that the aliphatic diamine forming the aliphatic diamine unit may be one type of aliphatic diamine or may be a combination of two or more types of aliphatic diamines.

Examples of alicyclic diamines that may form the alicyclic diamine unit include, but are not limited to, 1,4-cyclohexanediamine, 1,3-cyclohexanediamine, and 1,3-cyclopentanediamine.

Note that the alicyclic diamine forming the alicyclic diamine unit may be one type of alicyclic diamine or may be a combination of two or more types of alicyclic diamines.

Examples of aromatic diamines that may form the aromatic diamine unit include meta-xylylenediamine and the like, but are not limited thereto, and any aromatic-containing diamine may be used.

Note that the aromatic diamine forming the aromatic diamine unit may be one type of aromatic diamine or may be a combination of two or more types of aromatic diamines.

Of these diamine units, an aliphatic diamine unit is preferable, a diamine unit having a linear saturated aliphatic group having a carbon number of not less than 4 and not more than 10 is more preferable, a diamine unit having a linear saturated aliphatic group having a carbon number of not less than 6 and not more than 10 is even more preferable, and a hexamethylenediamine unit or a decamethylenediamine unit is particularly preferable.

The inclusion of diamine units such as described above tends to result in an amorphous polyamide having even better mechanical properties, fluidity, surface appearance, and so forth.

Note that the diamine units may be one type of diamine unit or may be a combination of two or more types of diamine units.

Moreover, the amorphous polyamide may further include a unit derived from a trivalent or higher polyvalent aliphatic amine such as bis(pentamethylene)triamine or bis(hexamethylene)triamine as necessary.

The trivalent or higher polyvalent aliphatic amine may be one type of polyvalent aliphatic amine or may be a combination of two or more types of polyvalent aliphatic amines.

The amorphous polyamide is preferably polyamide 6I, 6I/6T, 9I, or 10I, more preferably polyamide 6I, 6I/6T, or 10I, and most preferably polyamide 6I or 10I.

The amorphous polyamide can further include at least one unit selected from the group consisting of a lactam unit and an aminocarboxylic acid unit. The inclusion of such units tends to result in a polyamide having even better toughness. Note that a lactam and an aminocarboxylic acid forming the lactam unit and the aminocarboxylic acid unit referred to here are respectively a lactam and an aminocarboxylic acid that are capable of undergoing (condensation) polymerization.

The lactam and the aminocarboxylic acid forming the lactam unit and the aminocarboxylic acid unit may preferably be a lactam and an aminocarboxylic acid having a carbon number of not less than 4 and not more than 14, and more preferably a lactam and an aminocarboxylic acid having a carbon number of not less than 6 and not more than 12, for example, but are not limited thereto.

Examples of lactams that may form the lactam unit include, but are not limited to, butyrolactam, pivalolactam, ε-caprolactam, caprylolactam, enantholactam, undecanolactam, and laurolactam (dodecanolactam).

Of these examples, ε-caprolactam or laurolactam is preferable, and ε-caprolactam is more preferable as the lactam. The inclusion of such a lactam tends to result in a polyamide having even better mechanical properties.

The aminocarboxylic acid forming the aminocarboxylic acid unit may be, but is not limited to, an ω-aminocarboxylic acid or an α,ω-amino acid, which are ring-opened compounds of a lactam, for example.

The aminocarboxylic acid is preferably a linear or branched saturated aliphatic carboxylic acid having a carbon number of not less than 4 and not more than 14 that is substituted with an amino group at an ω-position. Examples of such aminocarboxylic acids include, but are not limited to, 6-aminocaproic acid, 11-aminoundecanoic acid, and 12-aminododecanoic acid. Examples of the aminocarboxylic acid also include para-aminomethylbenzoic acid and the like.

The lactam and the aminocarboxylic acid forming the lactam unit and the aminocarboxylic acid unit may be one type of lactam or aminocarboxylic acid or may be a combination of two or more types of lactams or aminocarboxylic acids.

The total proportion (mol%) of lactam units and aminocarboxylic acid units is preferably not less than 0 mol% and not more than 20 mol%, more preferably not less than 0 mol% and not more than 10 mol%, and even more preferably not less than 0 mol% and not more than 5 mol% relative to the overall polyamide.

When the total proportion of lactam units and aminocarboxylic acid units is within any of the ranges set forth above, this tends to result in effects such as improvement of fluidity.

The ends of the amorphous polyamide may be capped by an end-capping agent. The end-capping agent can also be added as a molecular weight modifier when the polyamide is produced from the dicarboxylic acid and the diamine described above and, as necessary, at least one compound selected from the group consisting of a lactam and an aminocarboxylic acid.

Examples of end-capping agents that may be used include, but are not limited to, monocarboxylic acids, monoamines, acid anhydrides (phthalic anhydride, etc.), monoisocyanates, monoacid halides, monoesters, and monoalcohols.

Of these end-capping agents, a monocarboxylic acid or a monoamine is preferable. Capping of the ends of the polyamide by an end-capping agent tends to result in a polyamide having even better thermal stability.

Note that the end-capping agent may be one type of end-capping agent or may be a combination of two or more types of end-capping agents.

Any monocarboxylic acid can be used as the end-capping agent so long as it has reactivity with an amino group that can be present at an end of the polyamide. Specific examples of monocarboxylic acids that may be used include, but are not limited to, aliphatic monocarboxylic acids, alicyclic monocarboxylic acids, and aromatic monocarboxylic acids.

Examples of aliphatic monocarboxylic acids that may be used include, but are not limited to, formic acid, acetic acid, propionic acid, butyric acid, valeric acid, caproic acid, caprylic acid, lauric acid, tridecanoic acid, myristic acid, palmitic acid, stearic acid, pivalic acid, and isobutyric acid.

Examples of alicyclic monocarboxylic acids that may be used include, but are not limited to, cyclohexanecarboxylic acid.

Examples of aromatic monocarboxylic acids that may be used include, but are not limited to, benzoic acid, toluic acid, α-naphthoic acid, β-naphthoic acid, methylnaphthoic acid, and phenylacetic acid.

One of these monocarboxylic acids may be used individually, or two or more of these monocarboxylic acids may be used in combination.

Any monoamine can be used as the end-capping agent so long as it has reactivity with a carboxy group that can be present at an end of the polyamide. Specific examples of monoamines that may be used include, but are not limited to, aliphatic monoamines, alicyclic monoamines, and aromatic monoamines.

Examples of aliphatic amines that may be used include, but are not limited to, methylamine, ethylamine, propylamine, butylamine, hexylamine, octylamine, decylamine, stearylamine, dimethylamine, diethylamine, dipropylamine, and dibutylamine.

Examples of alicyclic amines that may be used include, but are not limited to, cyclohexylamine and dicyclohexylamine.

Examples of aromatic amines that may be used include, but are not limited to, aniline, toluidine, diphenylamine, and naphthylamine.

One of these monoamines may be used individually, or two or more of these monoamines may be used in combination.

A polyamide that is end-capped by an end-capping agent tends to have even better fluidity, low water absorbency, formability, and surface appearance.

When obtaining a polyamide such as an amorphous polyamide, it is preferable that the additive amount of the dicarboxylic acid and the additive amount of the diamine are roughly equimolar amounts. When the amount of diamine that escapes from the reaction system during the polymerization reaction is also taken into account in the molar ratio, the molar amount of all diamine is preferably not less than 0.9 and not more than 1.2, more preferably not less than 0.95 and not more than 1.1, and even more preferably not less than 0.98 and not more than 1.05 relative to a molar amount of 1 of all dicarboxylic acid.

Polymer ends of the polyamide can be categorized and defined according to the following (1) to (4), though no specific limitation is made thereto.

Specifically, these categories are (1) amino ends, (2) carboxy ends, (3) capped ends, and (4) other ends.
(1) An amino end is a polymer end having an amino group (-NH₂ group) and originates from a diamine unit.
(2) A carboxy end is a polymer end having a carboxy group (-COOH group) and originates from a dicarboxylic acid.
(3) A capped end is an end that is formed when a capping agent is added during polymerization. The capping agent may be any of the previously described end-capping agents.
(4) Other ends are polymer ends that are not categorized as any of (1) to (3) described above. Specific examples of other ends include an end formed through a deammonification reaction of an amino end and an end formed through a decarboxylation reaction of a carboxy end.

The production method of the polyamide may be a method given as an example in [Polymerization step] of <Method of producing woody resin composition for flow forming> described further below.

The number-average molecular weight Mn of the polyamide is preferably 40,000 or less, more preferably 30,000 or less, even more preferably 20,000 or less, and particularly preferably 15,000 or less. When the number-average molecular weight Mn is not more than any of the upper limits set forth above, this tends to result in higher permeability into the woody material. On the other hand, the number-average molecular weight Mn of the polyamide is preferably 3,000 or more, and more preferably 5,000 or more. When the number-average molecular weight Mn is not less than any of the lower limits set forth above, it is easier to maintain the strength of an obtained shaped product.

Moreover, the weight-average molecular weight Mw of the polyamide is preferably 90,000 or less, more preferably 50,000 or less, even more preferably 30,000 or less, and particularly preferably 25,000 or less. When the weight-average molecular weight is not more than any of the upper limits set forth above, this tends to result in higher permeability into the woody material. On the other hand, the weight-average molecular weight Mw of the polyamide is preferably 10,000 or more, more preferably 11,000 or more, and even more preferably 12,000 or more. When the weight-average molecular weight Mw is not less than any of the lower limits set forth above, it is easier to maintain the strength of an obtained shaped product.

The molecular weight distribution Mw/Mn of the polyamide is preferably not less than 2.0 and not more than 2.5 regardless of the molecular weight.

Note that the number-average molecular weight Mn and the weight-average molecular weight Mw of the polyamide can be calculated as polymethyl methacrylate (PMMA) standard sample (produced by Polymer Laboratories Ltd.) equivalent values based on a calibration curve that is prepared by measuring number-average molecular weight in advance by gel permeation chromatography (GPC) with hexafluoroisopropanol (HFIP) as a solvent.

### [Other raw materials]

In addition to the woody material and the thermoplastic resin, the woody resin composition for flow forming of the present embodiment may further contain additives such as plasticizers, antioxidants, ultraviolet absorbers, age resistors, fillers, antibacterial agents, preservatives, antistatic agents, lubricants, and release agents. These additives can be used by premixing with monomers of the thermoplastic resin in the method of producing the woody resin composition for flow forming described further below.

The woody resin composition for flow forming of the present embodiment preferably further contains 1 mass% or more, more preferably 2 mass% or more, and even more preferably 3 mass% or more of water relative to the total mass of the woody resin composition for flow forming. The inclusion of water in an amount that is not less than any of the lower limits set forth above tends to further improve fluidity of the woody material through the water acting as a plasticizer. On the other hand, the upper limit for the water content is not specifically limited and can be set as 30 mass% or less, for example.

In the woody resin composition for flow forming of the present embodiment, the thermoplastic resin described above is present in a wood cell wall and/or wood cell lumen of the woody material. As a result of the woody resin composition for flow forming being in this state, it is possible to obtain a woody shaped product having excellent shape retention upon moisture absorption and upon drying.

The presence of the thermoplastic resin in a wood cell wall and/or wood cell lumen of the woody material can be confirmed using an optical microscope, for example. Specifically, an optical microscope (for example, a VHX-970F produced by Keyence Corporation) is used to observe a slice (thickness of approximately 25 µm) that has been cut out perpendicularly to a fiber direction of the woody material of the woody resin composition for flow forming in a field of view where the inside of a cell wall and the inside of a cell lumen can be observed. In a situation in which an observed image after in-situ polymerization has a darker color than an observed image before in-situ polymerization, this means that the thermoplastic resin is present. In this manner, it is possible to confirm the presence or absence of the thermoplastic resin in a wood cell wall and/or wood cell lumen.

In the woody resin composition for flow forming of the present embodiment, the thermoplastic resin remains in a wood cell wall and/or wood cell lumen of the woody material even after the woody resin composition for flow forming is subjected to solvent extraction using a solvent that can dissolve the thermoplastic resin. This means that there is strong bonding force between the woody material and the thermoplastic resin, that there is excellent shape retention upon moisture absorption and upon drying, and that there is a lower pressure and improved forming fluidity during forming flow. Consequently, it is possible to obtain a woody shaped product that has a thin shaped product thickness while also retaining toughness.

The presence or absence of the thermoplastic resin in a wood cell wall and/or wood cell lumen of the woody material in the woody resin composition for flow forming after solvent extraction can be confirmed using the optical microscope described above, for example.

Moreover, for a woody resin composition for flow forming in which the presence of a thermoplastic resin in a wood cell wall and/or wood cell lumen of a woody material had been confirmed by optical microscope observation as described above and that has then been subjected to the solvent extraction described above, the presence of the thermoplastic resin in a wood cell wall and/or wood cell lumen after solvent extraction can be quantitatively confirmed by using a solid-state NMR spectrometer to perform solid-state ¹³C-NMR measurement. For example, since the presence of a polyamide in a wood cell wall and/or wood cell lumen after solvent extraction can be judged from a signal A of a highest magnetic field CH2 (near 28 ppm), it is possible to quantitatively confirm the presence of the polyamide after solvent extraction by calculating signal A/signal B (percentage), with a signal originating from cellulose C1 in the woody material (near 105 ppm) taken to be B.

The value of signal A/signal B (percentage) is preferably more than 0%, more preferably 10% or more, and even more preferably 20% or more. Satisfaction of any of the ranges set forth above makes it possible to obtain a woody shaped product that has a thin shaped product thickness while also further retaining toughness.

The solvent in the solvent extraction can be selected as a solvent that can dissolve the thermoplastic resin in a concentration of preferably 0.5 mass% or more, more preferably 1 mass% or more, even more preferably 3 mass% or more, and further preferably 5 mass% or more. Specifically, in a case in which the thermoplastic resin is a polyamide, for example, the solvent may be formic acid, sulfuric acid, hexafluoroisopropanol (HFIP), calcium chloride aqueous solution, or the like. Alternatively, the solvent may be formic acid or the like in a case in which the thermoplastic resin is a polyoxymethylene, may be an aromatic organic solvent such as xylene or toluene in a case in which the thermoplastic resin is a polypropylene, and may be a halogenated solvent such as chloroform or methylene chloride or an aromatic organic solvent such as xylene or toluene in a case in which the thermoplastic resin is a polyphenylene ether, for example. Furthermore, since there is no good solvent in a case in which the thermoplastic resin is a polyarylene sulfide, for example, a method in which only the thermoplastic resin is brought into contact with the woody material is preferable.

The extraction conditions (temperature, time, etc.) should be set as appropriate within ranges that result in sufficient extraction of the thermoplastic resin according to the shape, size, and mass of the woody resin composition for flow forming, the type of thermoplastic resin, and so forth. For example, in a case in which the thermoplastic resin is a polyamide, the conditions may be 2 days to 5 days of immersion in the solvent at 0°C to 50°C.

### <Method of producing woody resin composition for flow forming>

A method of producing a woody resin composition for flow forming of the present embodiment includes an impregnation step of bringing a thermoplastic resin monomer into contact with a woody material and impregnating the thermoplastic resin monomer into the woody material and a polymerization step of polymerizing the thermoplastic resin monomer that has been impregnated into the woody material and synthesizing a thermoplastic resin.

As a result of including the steps described above, the method of producing a woody resin composition for flow forming of the present embodiment makes it possible to obtain a woody resin composition for flow forming that, when made into a woody shaped product, has excellent color tone, commercial producibility, mold transferability, surface hardness, and film formability.

Note that the term "color tone" as used in the present specification refers to the degree of intensity or lightness of the color of the surface of a shaped product.

Moreover, "commercial producibility" referred to in the present specification can be evaluated based on the production cost of a shaped product (cost of used raw materials, solvent, etc.) and the need, or lack thereof, for equipment to recover used solvent. Commercial producibility is given a better evaluation the lower the production cost and the more that recovery equipment for used solvent is unnecessary.

Furthermore, the term "mold transferability" as used in the present specification refers to a property of a shaped product with a fine structure being shaped and retaining a shape reflecting the structure of a mold.

Also, the term "surface hardness" as used in the present specification refers to a property of having excellent scratch resistance in a situation in which a shaped product comes into contact with a hard substance. The surface hardness can be evaluated by measuring the scratch hardness (pencil method) in accordance with ISO 15184:1996.

Moreover, the term "film formability" as used in the present specification more specifically refers to a property that the entire composition, inclusive of not only the resin but also the woody component, flows into a thin gap of 500 µm or less in thickness and can undergo inflow solidification.

The following provides a detailed description of each step of the method of producing a woody resin composition for flow forming of the present embodiment.

### [Impregnation step]

In the impregnation step, a thermoplastic resin monomer is brought into contact with a woody material, and the thermoplastic resin monomer is impregnated into the woody material.

No specific limitations are placed on the impregnation method so long as the thermoplastic resin monomer can be impregnated into the woody material. For example, a method in which the woody material is immersed in an aqueous solution of the thermoplastic resin monomer (monomer aqueous solution) may be adopted.

The monomer aqueous solution may be an aqueous solution of a monomer salt or the like. For example, in a case in which the thermoplastic resin is a polyamide, an aqueous solution of a salt of a diamine and a dicarboxylic acid forming the polyamide (dicarboxylic acid-diamine salt aqueous solution) can be used. The concentration of the monomer aqueous solution may be adjusted as appropriate in consideration of the resin content ratio in the woody resin composition that is to be obtained, and can be set as not less than 5 mass% and not more than 90 mass%, for example.

Although the immersion temperature may be room temperature (23°C ± 2°C), in a case in which the monomer salt does not dissolve in an aqueous solution thereof, the immersion temperature may be set as a temperature at which the monomer salt does dissolve (for example, 110°C in the case of a monomer salt of sebacic acid and decamethylenediamine).

The immersion time can be set as appropriate according to the shape, size, and mass of the woody material without any specific limitations. For example, the immersion time may be set as not less than 1 hour and not more than 200 hours per 10 g of the woody material in a dry state, may be set as not less than 20 hours and not more than 190 hours per 10 g of the woody material in a dry state, or may be set as not less than 40 hours and not more than 180 hours per 10 g of the woody material in a dry state.

The immersion pressure may be atmospheric pressure, raised pressure, or reduced pressure without any specific limitations.

### (Woody material)

The woody material can be any of the same woody materials as given as examples in <Woody resin composition for flow forming> described above.

### (Thermoplastic resin monomer)

The thermoplastic resin monomer can be any of the same thermoplastic resin monomers as given as examples in <Woody resin composition for flow forming> described above.

### [Polymerization step]

In the polymerization step, the thermoplastic resin monomer-impregnated woody material that has been obtained through the impregnation step is used to perform polymerization (in-situ polymerization) of the thermoplastic resin monomer that has been impregnated into the woody material.

The polymerization conditions may be set as appropriate according to the types of thermoplastic resin and monomer thereof.

A commonly known apparatus can be used as a polymerization apparatus in polymerization of the thermoplastic resin without any specific limitations. For example, an autoclave-type reactor, a tumbler-type reactor, or the like may be used.

The following provides a detailed description of a polymerization method of a polyamide as a specific example.

### (Polymerization method of polyamide)

The specific polymerization method of the polyamide may be a method given as an example below in (1) or (2), for example.
(1) A method in which a woody material that has been impregnated with a polyamide monomer aqueous solution (aqueous solution containing at least one selected from the group consisting of a dicarboxylic acid-diamine salt, a mixture of a dicarboxylic acid and a diamine, a lactam, and an aminocarboxylic acid) is heated, and polymerization is performed while maintaining a molten state of the monomer (hereinafter, also referred to as a "thermal melt polymerization method")
(2) A method in which the degree of polymerization of a polyamide obtained by the thermal melt polymerization method is increased while maintaining a solid state at a temperature not higher than the melting point of the polyamide (hereinafter, also referred to as a "thermal melt polymerization-solid phase polymerization method")

In a situation in which the polyamide is polymerized by the thermal melt polymerization method, a molten state is preferably maintained up until the end of polymerization. The polymerization conditions for maintaining a molten state may be conditions described below, for example. First, the polymerization pressure in the thermal melt polymerization method is controlled to not less than 14 kg/cm² and not more than 25 kg/cm² (gauge pressure), and heating is continued. Next, the tank internal pressure is lowered to atmospheric pressure (gauge pressure of 0 kg/cm²) over at least 30 minutes.

The following describes a specific example of polymerization of the polyamide by the thermal melt polymerization method.

The woody material that has been impregnated with the polyamide monomer aqueous solution and the monomer aqueous solution are transferred to an autoclave and are heated to a temperature of not lower than 150°C and not higher than 280°C. At the point at which the internal pressure of the autoclave reaches 1.0 MPa (gauge pressure), at least one component among water vapor and a gas component is expelled while holding the pressure at not less than 0.5 MPa and not more than 2.2 MPa (gauge pressure) to perform a reaction. Thereafter, the internal pressure of the autoclave is lowered to atmospheric pressure, and then water produced as a by-product can be effectively removed as necessary.

Next, the inside of the autoclave is pressurized using an inert gas such as nitrogen, and then the autoclave is cooled to yield a woody resin composition.

The polymerization method of the polyamide of the present embodiment may further include a raising step of raising the degree of polymerization of the polyamide (for example, a step of performing solid phase polymerization) after polymerization of the polyamide. Moreover, the monomer aqueous solution may contain an additive such as an end-capping agent or a polymerization catalyst as necessary.

In addition to the impregnation step and the polymerization step described above, the method of producing a woody resin composition for flow forming of the present embodiment may include other steps such as an adjustment step and a moisturizing step before the impregnation step.

### [Adjustment step]

In the adjustment step, delignification treatment is performed to adjust the lignin content of the woody material before the impregnation step.

The method by which the lignin content of the woody material is adjusted (delignification treatment method) may be a commonly known lignin treatment method such as the Klaudiz method, the Wize method, kraft pulping, soda pulping, phenol pulping, organic acid pulping, organosolv pulping, the ASAM method, or bleaching treatment, of which, the Klaudiz method is preferable as the adjustment method.

Details of the lignin content ratio in the woody material and the measurement method thereof may be the same as described in [Woody material] for the woody resin composition for flow forming of the present embodiment described above.

### [Moisturizing step]

In the moisturizing step, the woody material is brought into contact with water before the impregnation step, but after the adjustment step.

By causing the inclusion of water in the woody material, it is possible for water molecules to infiltrate between hydrogen bonds of cellulose or hemicellulose serving as a main component forming the woody material and also to facilitate exchange with the resin in the previously described impregnation step. Moreover, since water in the woody material acts as a plasticizer, the inclusion of water can also further improve fluidity during shaping of the obtained woody resin composition for flow forming.

The moisturization method may be a method in which saturated steam is brought into contact with the woody material, a method in which the woody material is subjected to moisture adjustment in an environment having a certain relative humidity, a method in which the woody material is immersed in water, or the like, but is not limited to these methods.

### <Woody shaped product>

A woody shaped product of the present embodiment is a shaped product that is obtained through shaping of a woody resin composition for flow forming that contains a woody material and a thermoplastic resin.

The woody resin composition for flow forming serving as a raw material of the woody shaped product of the present embodiment can be the same as that given as an example in <Woody resin composition for flow forming> described above.

The content of the woody material in the woody shaped product is not less than 50 mass% and less than 95 mass%, preferably not less than 50 mass% and not more than 90 mass%, and more preferably not less than 50 mass% and not more than 80 mass% relative to the total mass of the woody shaped product.

When the content of the woody material is within any of the ranges set forth above, not only does the woody shaped product have a high ratio of bio-derived components and be able to make an environmental contribution, it also has a high level of woody external appearance.

Note that the content of the woody material in the woody shaped product can be considered equivalent to a value in the woody resin composition for flow forming that serves as a raw material of the woody shaped product.

The content of the thermoplastic resin in the woody shaped product is more than 5 mass% and not more than 50 mass%, preferably not less than 10 mass% and not more than 50 mass%, and more preferably not less than 20 mass% and not more than 50 mass% relative to the total mass of the woody shaped product.

Through the content of the woody material being within any of the ranges set forth above, the woody shaped product has a high level of woody external appearance.

Note that the content of the thermoplastic resin in the woody shaped product can be considered equivalent to a value in the woody resin composition for flow forming that serves as a raw material of the woody shaped product.

In the woody shaped product of the present embodiment, the thermoplastic resin is present in a wood cell wall and/or wood cell lumen of the woody material. Consequently, the woody shaped product has excellent shape retention upon moisture absorption and upon drying.

The presence of the thermoplastic resin in a wood cell wall and/or wood cell lumen of the woody material can be confirmed using an optical microscope, for example, in the same way as for the woody resin composition for flow forming of the present embodiment described above.

In the woody shaped product of the present embodiment, the thermoplastic resin remains in a wood cell wall and/or wood cell lumen of the woody material even after the woody shaped product is subjected to solvent extraction using a solvent that can dissolve the thermoplastic resin. In other words, the woody shaped product has strong bonding force between the woody material and the thermoplastic resin and has excellent shape retention upon moisture absorption and upon drying. Consequently, it is possible to obtain a woody shaped product that has a thin shaped product thickness while also retaining toughness.

It is possible to confirm whether or not the thermoplastic resin remains in a wood cell wall and/or wood cell lumen of the woody material in the woody shaped product after solvent extraction using an optical microscope, for example, in the same way as for the woody resin composition for flow forming of the present embodiment described above.

The solvent in solvent extraction can be the same as for the woody material given as an example in <Woody resin composition for flow forming> described above.

The extraction conditions (temperature, time, etc.) should be set as appropriate within ranges that result in sufficient extraction of the thermoplastic resin according to the shape, size, and mass of the woody shaped product, the type of thermoplastic resin, and so forth above. For example, in a case in which the thermoplastic resin is a polyamide, the conditions may be 2 days to 5 days of immersion in the solvent at 0°C to 50°C.

### <Production method of woody shaped product>

The production method of the woody shaped product of the present embodiment may be extrusion molding, injection molding, press forming, or the like, for example, without any specific limitations. Of these methods, injection molding or press forming is preferable.

Examples of shaping devices that may be used in the production method of the woody shaped product of the present embodiment include a film forming machine, an extrusion molding machine (exemplified by a sheet forming machine), an inflation molding machine, a blow molding machine, an injection molding machine, and a press forming machine.

### (Injection molding)

A method of injection molding the woody shaped product of the present embodiment may be, but is not limited to, a method including, in stated order, a heating step of heating the woody resin composition for flow forming to at least the melting point or glass-transition temperature of the thermoplastic resin contained in the woody resin composition for flow forming so as to plasticize the woody resin composition for flow forming, a pressurized flow step of pressurizing the plasticized woody resin composition for flow forming so as to cause the woody resin composition for flow forming to flow and pass through a tube of not less than 0.5 mm and not more than 3 mm in diameter, and a cooling step of cooling the woody resin composition for flow forming that has flowed through the tube after the woody resin composition for flow forming has been loaded into a cavity of a specific shape, for example.

Performing injection molding with the configuration described above tends to result in a woody shaped product having excellent shape retention upon moisture absorption and upon drying, film formability, and surface appearance.

The following describes each step of this injection molding in detail.

### -Heating step-

In the heating step, the woody resin composition for flow forming is heated to at least the melting point or glass-transition temperature of the thermoplastic resin contained in the woody resin composition for flow forming so as to plasticize the woody resin composition for flow forming.

The heating temperature can be set as appropriate according to the type of thermoplastic resin. For example, the heating temperature can be set as not lower than a flow start temperature of the thermoplastic resin, and is preferably a temperature at least 10°C higher than the flow start temperature, and more preferably a temperature at least 20°C higher than the flow start temperature. Note that the flow start temperature is the melting point in a case in which the thermoplastic resin is a crystalline resin and is the glass-transition temperature in a case in which the thermoplastic resin is an amorphous resin. Moreover, the upper limit for the heating temperature is preferably 220°C or lower, and more preferably 200°C or lower from a viewpoint of inhibiting decomposition of the woody material.

The heating time can be set as 60 minutes or less, for example, and is preferably 30 minutes or less, more preferably 20 minutes or less, even more preferably 15 minutes or less, and particularly preferably 10 minutes or less. On the other hand, the lower limit for the heating time can be set as 1 minute or more, for example, and is preferably 2 minutes or more.

### -Pressurized flow step-

In the pressurized flow step, the woody resin composition for flow forming that has been plasticized is pressurized so as to cause the woody resin composition for flow forming to flow and pass through a tube of not less than 0.5 mm and not more than 3 mm in diameter.

The pressurization pressure may, for example, be any pressure so long as the pressure required for flow is applied, and a lower pressure is preferable as it requires less energy. For example, the pressure may be 50 MPa or more. Moreover, since the upper limit for the injection pressure of a typical injection molding machine or the like is often approximately 250 MPa, for example, the upper limit is preferably 250 MPa or less, more preferably 200 MPa or less, and even more preferably 150 MPa or less.

### -Cooling step-

In the cooling step, the woody resin composition for flow forming that has flowed through the tube is cooled after being loaded into a cavity of a specific shape.

Note that the cavity referred to above is a hollow section for solidifying the woody resin composition for flow forming that has flowed into the mold, and a cavity having the desired shape can be selected as appropriate.

The cooling method can be a typical cooling method such as air cooling or liquid cooling of the mold itself, for example. A method in which temperature control of the mold is performed using water or oil so as to take heat away from the woody resin composition for flow forming is preferable.

The cooling time can be selected as appropriate as a time of 4 hours or less, for example, but is dependent on the type of device. In the case of typical injection molding, the cooling time is generally 1 minute or less.

### (Press forming)

A method of press forming the woody shaped product of the present embodiment may be, but is not limited to, a method that includes, in stated order, a heating step of heating the woody resin composition for flow forming to at least the melting point or glass-transition temperature of the thermoplastic resin contained in the woody resin composition for flow forming so as to plasticize the woody resin composition for flow forming, a pressing step of loading the plasticized woody resin composition for flow forming into a cavity having a specific shape and clamping the woody resin composition for flow forming therein, and a cooling step of cooling the woody resin composition for flow forming that has been clamped, for example.

Performing press forming with the configuration described above tends to result in a woody shaped product having excellent shape retention upon moisture absorption and upon drying, film formability, and surface appearance. Moreover, it is easier to retain a grain pattern of the woody material in press forming than in other shaping methods such as injection molding, and thus it is easy to obtain a shaped product having a woodier texture.

The following describes each step of this press forming in detail.

### -Heating step-

In the heating step, the woody resin composition for flow forming is heated to at least the melting point or glass-transition temperature of the thermoplastic resin contained in the woody resin composition for flow forming so as to plasticize the woody resin composition for flow forming.

The heating temperature and the heating time may be the same as the temperature and time given as examples for the heating step in injection molding described above.

Heating of the woody resin composition for flow forming in the heating step may be performed in a state in which the woody resin composition for flow forming has been loaded into a cavity of a specific shape, and then a transition to the pressing step may be made in that state (i.e., clamping may be performed in that state).

### -Pressing step-

In the pressing step, the woody resin composition for flow forming that has been plasticized is loaded into a cavity of a specific shape and is clamped.

Note that the cavity referred to above is a hollow section of a mold for solidifying the woody resin composition for flow forming that has been loaded, and a cavity having the desired shape can be selected as appropriate.

The clamping pressure may, for example, be any pressure so long as the pressure required for flow inside of the cavity is applied, and a lower pressure is preferable as it requires less energy. For example, the pressure may be 1 MPa or more. Since the upper limit for the clamping pressure of a typical press forming machine or the like is often approximately 500 MPa, for example, the upper limit is preferably 400 MPa or less, more preferably 300 MPa or less, and even more preferably 200 MPa or less.

### -Cooling step-

In the cooling step, the woody resin composition for flow forming that has been clamped is cooled.

The cooling method and cooling time may be the same as the method and time given as examples for the cooling step in injection molding described above.

### EXAMPLES

The following provides a detailed description of the present disclosure through specific examples and comparative examples. However, the present disclosure is not limited to the following examples.

### <Measurement and evaluation methods>

The following describes measurement and evaluation methods that were used in the examples and comparative examples.

### [Structural analysis]

A solid-state NMR spectrometer (400 MHz NMR produced by Varian) was used to perform solid-state ¹³C-NMR measurement of an obtained woody resin composition for flow forming by the CP/MAS method with a wait time of 5 seconds and a cumulative number of 1,024 times.

### [Weight-average molecular weight]

The weight-average molecular weight of a resin in an obtained woody resin composition for flow forming was calculated as a polymethyl methacrylate (PMMA) standard sample (produced by Polymer Laboratories Ltd.) equivalent value based on a calibration curve that was prepared by measuring weight-average molecular weight in advance using a gel permeation chromatograph (GPC) (HLC-8020 produced by Tosoh Corporation) and hexafluoroisopropanol (HFIP) solvent. Note that a TSK-GEL GMHHR-M and a G1000HHR were used as the GPC column.

### [Presence or absence of thermoplastic resin in wood cell wall and/or cell lumen]

For an obtained woody resin composition for flow forming, the presence or absence of a thermoplastic resin in a wood cell wall and/or wood cell lumen of Japanese cypress veneer was confirmed using an optical microscope. Specifically, an optical microscope (VHX-970F produced by Keyence Corporation) was used to observe a slice (thickness of approximately 25 µm) that had been cut out perpendicularly to a fiber direction of the Japanese cypress veneer of the woody resin composition for flow forming in a field of view where the inside of a cell wall and the inside of a cell lumen could be observed.

The thermoplastic resin was judged to be present in a situation in which an observed image after in-situ polymerization and after solvent extraction had a darker color than an observed image before in-situ polymerization.

### (Solvent extraction)

A woody resin composition for flow forming in which the presence of a resin component in a cell wall and/or cell lumen had been confirmed by optical microscope observation described above was cut to a fiber direction length of approximately 2 mm, and this cut product was immersed under stirring at 23°C for 72 hours in a good solvent for a resin contained in the woody resin composition for flow forming (HFIP in the case of polyamide) so as to perform solvent extraction of the thermoplastic resin in the woody resin composition for flow forming.

The woody resin composition for flow forming after solvent extraction was subjected to the optical microscope observation described above in the same manner as before solvent extraction, and the presence or absence of the thermoplastic resin in a wood cell wall and/or cell lumen was confirmed.

### (Presence of thermoplastic resin in wood cell wall and/or wood cell lumen after solvent extraction)

A solid-state NMR spectrometer (400 MHz NMR produced by Varian) was used to perform solid-state ¹³C-NMR measurement by the CP/MAS method with a wait time of 5 seconds and a cumulative number of 1,024 times with respect to a woody resin composition for flow forming in which the presence of a resin component in a cell wall and/or cell lumen had been confirmed by the optical microscope observation described above and that had been subjected to the solvent extraction described above. Since the presence of a polyamide in a wood cell wall and/or wood cell lumen after solvent extraction can be judged from a signal A of a highest magnetic field CH2 (near 28 ppm), for example, it was possible to quantitatively confirm the presence of the polyamide after solvent extraction by calculating signal A/signal B (percentage), with a signal originating from cellulose C1 in the woody material (near 105 ppm) taken to be B.

### [Pre-shaping water content]

The mass (W_{wet}) of a woody resin composition for flow forming in a state with moisture absorbed and the mass (W_{dry}) of the woody resin composition for flow forming after 24 hours of vacuum drying under a condition of 100°C were each measured, and the pre-shaping water content (mass%) was calculated according to the following formula. $Pre - shaping water content \left(mass%\right) = \left({W}_{wet}-{W}_{dry}\right) \times 100 / {W}_{dry}$

### [Color tone]

The color tone of an obtained gear shaped product was visually confirmed. Better thermal stability tends to result in suppressed discoloration and brighter color tone.

### [Commercial producibility]

Commercial producibility was evaluated according to the following three levels based on the cost of a solvent that was used and the necessity of equipment for recovering used solvent in production of a woody resin composition.

### (Evaluation standard)

3: Use of solvent not necessary and solvent recovery equipment not necessary
2: Use of solvent necessary and small-scale used solvent recovery equipment necessary
1: Use of solvent necessary and large-scale used solvent recovery equipment necessary

### [Mold transferability]

The mold transferability of an obtained gear shaped product was evaluated according to the following five levels.

### (Evaluation standard)

5: Gear tooth shape forms right angle equivalent to mold and entire shaped product has glossiness
4: Gear tooth shape forms right angle equivalent to mold but part of shaped product does not have glossiness
3: Gear tooth shape forms right angle equivalent to mold but shaped product does not have any glossiness
2: Gear tooth shape does not reflect mold shape and shaped product does not have any glossiness
1: Insufficient mold filling

### [Surface hardness]

The surface hardness of a shaped product was measured as the scratch hardness (pencil method) in accordance with ISO 15184:1996.

### [Water resistance]

An obtained shaped product was immersed in water set to 80°C, the change of external appearance after 10 hours was confirmed, and an evaluation was made according to the following four levels.

### (Evaluation standard)

4: No change of external appearance
3: Slight deformation (swelling) due to water absorption by shaped product
2: Partial collapse of shaped product due to water absorption by shaped product
1: Original shape of shaped product unrecognizable

### [Film formability]

Film formability was evaluated according to the following five levels based on the amount and toughness of a raw material that flows into a burr-like clearance (100 µm to 200 µm) between a piston and a cylinder during injection molding.

### (Evaluation standard)

5: Inflow length of resin-impregnated raw material containing wood cells is 10 mm or more, and burr has toughness and does not easily collapse
4: Inflow length of resin-impregnated raw material containing wood cells is not less than 8 mm and less than 10 mm, and burr has toughness and does not easily collapse
3: Inflow length of resin-impregnated raw material containing wood cells is not less than 5 mm and less than 8 mm, and burr has toughness and does not easily collapse
2: Inflow length of resin-impregnated raw material containing wood cells is less than 5 mm or burr is brittle and easily collapses
1: Almost no inflow of resin-impregnated raw material containing wood cells or burr is so brittle that shape cannot be maintained

### <Raw materials>

The following describes raw materials that were used in the examples and comparative examples.

### [Woody material]

Japanese cypress veneer: A hole saw having an internal diameter of 26 mm was used to cut out disk shapes of approximately 25 mm in diameter from a rotary veneer that had been peeled with a thickness of 4 mm (radial direction: R) from a Japanese cypress log, thereby obtaining numerous pieces of Japanese cypress veneer with a flat-grain face (LT face) of approximately 25 mm in diameter and a thickness (R) of 4 mm.

### <Lignin adjustment method>

Japanese cypress veneer was subjected to adjustment of lignin content (delignification treatment) by a method in accordance with the Klaudiz method (reference literature 1: Sakaguchi Takafusa et al., "Wood Chemistry", Buneido, 1985, pp. 69-70). In more detail, dried Japanese cypress veneer was immersed in a 4 mass% aqueous solution of sodium chlorite that was set to a temperature of 45°C and was subjected to 6 hours of immersion treatment to obtain Japanese cypress veneer having an adjusted lignin content (delignified Japanese cypress veneer).

After treatment, the delignified Japanese cypress veneer was immersed in water a plurality of times to perform washing and place the delignified Japanese cypress veneer in a water-saturated state. Note that a treatment solution that had been preheated was injected under reduced pressure in order to cause quick permeation and reaction of the treatment liquid inside of the Japanese cypress veneer. The delignified Japanese cypress veneer was stored in a water-saturated state until subsequent resin impregnation. When a portion of the obtained delignified Japanese cypress veneer was dried and the weight loss from the dry Japanese cypress veneer before lignin treatment was measured, this weight loss was 6.8 mass%.

### <Monomer salt impregnation method>

Delignified Japanese cypress veneer was immersed in a 50 mass% uniform aqueous solution of equimolar amounts of raw material monomers (monomer salt aqueous solution) under atmospheric pressure at 23°C for at least 1 week. The monomer salt aqueous solution was in the form of a slurry, and in a situation in which the raw material monomer salt did not dissolve, at least 1 week of immersion was performed at a temperature at which the salt did dissolve. For example, in the case of a raw material monomer salt of sebacic acid and decamethylenediamine, at least 1 week of immersion was performed at a temperature of 110°C.

### <Production of woody shaped product>

### [Example 1]

### (Production of woody resin composition for flow forming (raw material for injection))

A 50 mass% uniform aqueous solution of equimolar amounts of raw material monomers (monomer salt aqueous solution) was produced by dissolving 1,500 g of an equimolar salt of isophthalic acid and hexamethylenediamine in 1,500 g of distilled water. Delignified Japanese cypress veneer that had undergone adjustment of lignin content by the lignin adjustment method described above was immersed in the monomer salt aqueous solution in the monomer salt impregnation method described above. During the above, the concentration of the monomer salt aqueous solution was adjusted such as to give a resin content ratio of 30 mass% as determined from the mass of the delignified Japanese cypress veneer in a dry state and the mass (calculated value) of the resin composition in the obtained woody resin composition. The impregnated Japanese cypress veneer and the monomer salt aqueous solution were transferred to an autoclave, and the temperature was raised to 240°C while gradually expelling water vapor once the internal pressure reached 1.0 MPa to perform a reaction over 1 hour. Next, the pressure was lowered over 30 minutes, the inside of the autoclave was depressurized to 0.02 MPa using a vacuum device, and this pressure was maintained for 10 minutes. Thereafter, the pressure inside of the autoclave was increased with nitrogen, and the autoclave was then cooled to yield a woody resin composition for flow forming.

As a result of CP/MAS NMR measurement, it was confirmed that polyamide 6I had been produced by in-situ polymerization and was contained in the woody resin composition for flow forming. Moreover, as a result of GPC measurement, the weight-average molecular weight of the polyamide 6I was confirmed to be 16,000.

Furthermore, when the woody material content ratio in the woody resin composition for flow forming was calculated from the mass of the woody resin composition for flow forming and the mass (estimated value) of the delignified Japanese cypress veneer in a dry state, which was calculated through conversion from the weight loss (6.8 mass%) of the Japanese cypress veneer due to delignification treatment, the woody material content was 70 mass% (resin content ratio of 30 mass%).

The woody resin composition for flow forming maintained a woody sheet-like form with the same shape as the original Japanese cypress veneer and exhibited a structure with the synthesized resin impregnated into the structure of the Japanese cypress veneer.

As a result of optical microscope observation, thermoplastic resin was confirmed to be present in a wood cell wall and/or cell lumen both before solvent extraction and after solvent extraction. Photographs of a cross-section of a woody shaped product as observed using an optical microscope are presented in FIG. 1. The left side is a photograph before solvent extraction, and the right side is a photograph after solvent extraction.

In results of CP/MAS NMR measurement after solvent extraction, signal A/signal B of the polyamide 6I after solvent extraction was 37%.

### (Injection molding)

A vertical injection unit equipped with a capillary hole of 3 mm in diameter × 10 mm in length at the tip of a mold having a piston with an external diameter of 29.7 mm and a cylinder with an internal diameter of 30.0 mm and a gear mold having a cavity with a gear shape provided at a lower part of the injection unit were set up between heating plates of a press forming machine. The mold was heated through heat conduction from the heating plates until the surface temperature of the cylinder reached 150°C, and then a plurality of pieces of the woody resin composition (approximately 10 g) were loaded into the cylinder, and the woody resin composition was preheated for 5 minutes while slowly consolidating the woody resin composition. Thereafter, a heating plate was lowered at a lowering rate of 10 mm/min so as to apply pressure to the woody resin composition inside of the cylinder, fluidize the woody resin composition, and cause the woody resin composition to pass through the capillary and move into the mold cavity. Once all of the woody resin composition had moved into the mold cavity, the heating was stopped, and a shaped product inside of the mold was removed once the mold temperature was confirmed to have reached 100°C or lower. The piston pressure and the clamping pressure at this time were 212 MPa. In this molding, the pressure applied to the piston when the distance from the tip of the piston to the capillary reached 4 mm was recorded as the pressure at the time of out-flow of the woody resin composition in the cylinder (pressure during flow).

The results of various measurements and evaluations are shown in Table 1.

### [Example 2]

A woody shaped product was produced in the same way as in Example 1 with the exception that untreated Japanese cypress veneer that had not been subjected to lignin group treatment by the lignin adjustment method described above was used.

As a result of CP/MAS NMR measurement, it was confirmed that polyamide 6I had been produced by in-situ polymerization and was contained in the woody resin composition for flow forming. Moreover, as a result of GPC measurement, the weight-average molecular weight of the polyamide 6I was confirmed to be 15,000.

Furthermore, the woody material content ratio in the woody resin composition, calculated in the same way as in Example 1, was 70 mass% (resin content ratio of 30 mass%).

The woody resin composition for flow forming maintained a woody sheet-like form with the same shape as the original Japanese cypress veneer and exhibited a structure with the synthesized resin impregnated into the structure of the Japanese cypress veneer.

The results of various measurements and evaluations are shown in Table 1.

### [Example 3]

A woody shaped product was produced in the same way as in Example 1 with the exception that impregnation with the monomer salt aqueous solution by the monomer salt impregnation method described above was not performed, and the delignified Japanese cypress veneer and the monomer salt aqueous solution were loaded into the autoclave straight before polymerization.

As a result of CP/MAS NMR measurement, it was confirmed that polyamide 6I had been produced by in-situ polymerization and was contained in the woody resin composition for flow forming. Moreover, as a result of GPC measurement, the weight-average molecular weight of the polyamide 6I was confirmed to be 25,000.

Furthermore, the woody material content ratio in the woody resin composition, calculated in the same way as in Example 1, was 70 mass% (resin content ratio of 30 mass%).

The woody resin composition for flow forming maintained a woody sheet-like form with the same shape as the original Japanese cypress veneer and exhibited a structure with the synthesized resin impregnated into the structure of the Japanese cypress veneer.

The results of various measurements and evaluations are shown in Table 1.

### [Example 4]

### (Production of woody resin composition for flow forming (raw material for injection))

A 50 mass% uniform aqueous solution of equimolar amounts of raw material monomers (monomer salt aqueous solution) was produced by dissolving 1,500 g of an equimolar salt of sebacic acid and hexamethylenediamine in 1,500 g of distilled water. Delignified Japanese cypress veneer that had undergone adjustment of lignin content by the lignin adjustment method described above was immersed in the monomer salt aqueous solution in the monomer salt impregnation method described above. During the above, the concentration of the monomer salt aqueous solution was adjusted such as to give a resin content ratio of 30 mass% as determined from the mass of the delignified Japanese cypress veneer in a dry state and the mass (calculated value) of the resin composition in the obtained woody resin composition. The impregnated Japanese cypress veneer and the monomer salt aqueous solution were transferred to an autoclave, and the temperature was raised to 240°C while gradually expelling water vapor once the internal pressure reached 0.8 MPa to perform a reaction over 1 hour. Next, the pressure was lowered over 30 minutes, the inside of the autoclave was depressurized to 0.02 MPa using a vacuum device, and this pressure was maintained for 10 minutes. Thereafter, the pressure inside of the autoclave was increased with nitrogen, and the autoclave was then cooled to yield a woody resin composition for flow forming.

As a result of CP/MAS NMR measurement, it was confirmed that polyamide 610 had been produced by in-situ polymerization and was contained in the woody resin composition for flow forming. Moreover, as a result of GPC measurement, the weight-average molecular weight of the polyamide 610 was confirmed to be 19,000.

Furthermore, the woody material content ratio in the woody resin composition, calculated in the same way as in Example 1, was 70 mass% (resin content ratio of 30 mass%).

The woody resin composition for flow forming maintained a woody sheet-like form with the same shape as the original Japanese cypress veneer and exhibited a structure with the synthesized resin impregnated into the structure of the Japanese cypress veneer.

### (Injection molding)

The obtained woody resin composition was used to perform injection molding in the same way as in Example 1 to produce a woody shaped product.

The results of various measurements and evaluations are shown in Table 1.

### [Example 5]

### (Production of woody resin composition for flow forming (raw material for injection))

A 50 mass% uniform aqueous solution of equimolar amounts of raw material monomers (monomer salt aqueous solution) was produced by dissolving 1,500 g of an equimolar salt of adipic acid and hexamethylenediamine in 1,500 g of distilled water. Delignified Japanese cypress veneer that had undergone adjustment of lignin content by the lignin adjustment method described above was immersed in the monomer salt aqueous solution in the monomer salt impregnation method described above. During the above, the concentration of the monomer salt aqueous solution was adjusted such as to give a resin content ratio of 30 mass% as determined from the mass of the delignified Japanese cypress veneer in a dry state and the mass (calculated value) of the resin composition in the obtained woody resin composition. The impregnated Japanese cypress veneer and the monomer salt aqueous solution were transferred to an autoclave, and the temperature was raised to 270°C while gradually expelling water vapor once the internal pressure reached 1.0 MPa to perform a reaction over 1 hour. Next, the pressure was lowered over 30 minutes, the inside of the autoclave was depressurized to 0.02 MPa using a vacuum device, and this pressure was maintained for 10 minutes. Thereafter, the pressure inside of the autoclave was increased with nitrogen, and the autoclave was then cooled to yield a woody resin composition for flow forming.

As a result of CP/MAS NMR measurement, it was confirmed that polyamide 66 had been produced by in-situ polymerization and was contained in the woody resin composition for flow forming. Moreover, as a result of GPC measurement, the weight-average molecular weight of the polyamide 66 was confirmed to be 23,000.

Furthermore, the woody material content ratio in the woody resin composition, calculated in the same way as in Example 1, was 70 mass% (resin content ratio of 30 mass%).

The woody resin composition for flow forming maintained a woody sheet-like form with the same shape as the original Japanese cypress veneer and exhibited a structure with the synthesized resin impregnated into the structure of the Japanese cypress veneer.

### (Injection molding)

The obtained woody resin composition was used to perform injection molding in the same way as in Example 1 to produce a woody shaped product.

The results of various measurements and evaluations are shown in Table 1.

### [Example 6]

### (Production of woody resin composition for flow forming (raw material for injection))

A 50 mass% uniform aqueous solution of equimolar amounts of raw material monomers (monomer salt aqueous solution) was produced by dissolving 1,500 g of an equimolar salt of sebacic acid and decamethylenediamine in 1,500 g of distilled water. Delignified Japanese cypress veneer that had undergone adjustment of lignin content by the lignin adjustment method described above was immersed in the monomer salt aqueous solution in the monomer salt impregnation method described above. During the above, the concentration of the monomer salt aqueous solution was adjusted such as to give a resin content ratio of 30 mass% as determined from the mass of the delignified Japanese cypress veneer in a dry state and the mass (calculated value) of the resin composition in the obtained woody resin composition. The impregnated Japanese cypress veneer and the monomer salt aqueous solution were transferred to an autoclave, and the temperature was raised to 200°C while gradually expelling water vapor once the internal pressure reached 1.0 MPa to perform a reaction over 1 hour. Next, the pressure was lowered over 30 minutes, the inside of the autoclave was depressurized to 0.02 MPa using a vacuum device, and this pressure was maintained for 10 minutes. Thereafter, the pressure inside of the autoclave was increased with nitrogen, and the autoclave was then cooled to yield a woody resin composition for flow forming.

As a result of CP/MAS NMR measurement, it was confirmed that polyamide 1010 had been produced by in-situ polymerization and was contained in the woody resin composition for flow forming. Moreover, as a result of GPC measurement, the weight-average molecular weight of the polyamide 1010 was confirmed to be 14,000.

Furthermore, the woody material content ratio in the woody resin composition, calculated in the same way as in Example 1, was 70 mass% (resin content ratio of 30 mass%).

The woody resin composition for flow forming maintained a woody sheet-like form with the same shape as the original Japanese cypress veneer and exhibited a structure with the synthesized resin impregnated into the structure of the Japanese cypress veneer.

### (Injection molding)

The obtained woody resin composition was used to perform injection molding in the same way as in Example 1 to produce a woody shaped product.

The results of various measurements and evaluations are shown in Table 1.

### [Example 7]

### (Production of woody resin composition for flow forming (raw material for injection))

A 50 mass% uniform aqueous solution of equimolar amounts of raw material monomers (monomer salt aqueous solution) was produced by dissolving 1,500 g of an equimolar salt of isophthalic acid and decamethylenediamine in 1,500 g of distilled water. Delignified Japanese cypress veneer that had undergone adjustment of lignin content by the lignin adjustment method described above was immersed in the monomer salt aqueous solution in the monomer salt impregnation method described above. During the above, the concentration of the monomer salt aqueous solution was adjusted such as to give a resin content ratio of 30 mass% as determined from the mass of the delignified Japanese cypress veneer in a dry state and the mass (calculated value) of the resin composition in the obtained woody resin composition. The impregnated Japanese cypress veneer and the monomer salt aqueous solution were transferred to an autoclave, and the temperature was raised to 200°C while gradually expelling water vapor once the internal pressure reached 0.8 MPa to perform a reaction over 1 hour. Next, the pressure was lowered over 30 minutes, the inside of the autoclave was depressurized to 0.02 MPa using a vacuum device, and this pressure was maintained for 10 minutes. Thereafter, the pressure inside of the autoclave was increased with nitrogen, and the autoclave was then cooled to yield a woody resin composition for flow forming.

As a result of CP/MAS NMR measurement, it was confirmed that polyamide 10I had been produced by in-situ polymerization and was contained in the woody resin composition for flow forming. Moreover, as a result of GPC measurement, the weight-average molecular weight of the polyamide 10I was confirmed to be 18,000.

Furthermore, the woody material content ratio in the woody resin composition, calculated in the same way as in Example 1, was 70 mass% (resin content ratio of 30 mass%).

The woody resin composition for flow forming maintained a woody sheet-like form with the same shape as the original Japanese cypress veneer and exhibited a structure with the synthesized resin impregnated into the structure of the Japanese cypress veneer.

### (Injection molding)

The obtained woody resin composition was used to perform injection molding in the same way as in Example 1 to produce a woody shaped product.

The results of various measurements and evaluations are shown in Table 1.

### [Example 8]

### (Production of woody resin composition for flow forming (raw material for injection))

A 50 mass% uniform aqueous solution of equimolar amounts of raw material monomers (monomer salt aqueous solution) was produced by dissolving 1,500 g of an equimolar salt of isophthalic acid and decamethylenediamine in 1,500 g of distilled water. Untreated Japanese cypress veneer that had not been subjected to lignin group treatment by the lignin adjustment method described above was immersed in the monomer salt aqueous solution in the monomer salt impregnation method described above. During the above, the concentration of the monomer salt aqueous solution was adjusted such as to give a resin content ratio of 50 mass% as determined from the mass of the delignified Japanese cypress veneer in a dry state and the mass (calculated value) of the resin composition in the obtained woody resin composition. The impregnated Japanese cypress veneer and the monomer salt aqueous solution were transferred to an autoclave, and the temperature was raised to 200°C while gradually expelling water vapor once the internal pressure reached 0.8 MPa to perform a reaction over 1 hour. Next, the pressure was lowered over 30 minutes, the inside of the autoclave was depressurized to 0.02 MPa using a vacuum device, and this pressure was maintained for 10 minutes. Thereafter, the pressure inside of the autoclave was increased with nitrogen, and the autoclave was then cooled to yield a woody resin composition for flow forming.

As a result of CP/MAS NMR measurement, it was confirmed that polyamide 10I had been produced by in-situ polymerization and was contained in the woody resin composition for flow forming. Moreover, as a result of GPC measurement, the weight-average molecular weight of the polyamide 10I was confirmed to be 17,000.

Furthermore, the woody material content ratio in the woody resin composition, calculated in the same way as in Example 1, was 50 mass% (resin content ratio of 50 mass%).

The woody resin composition for flow forming maintained a woody sheet-like form with the same shape as the original Japanese cypress veneer and exhibited a structure with the synthesized resin impregnated into the structure of the Japanese cypress veneer.

### (Injection molding)

The obtained woody resin composition was used to perform injection molding in the same way as in Example 1 to produce a woody shaped product.

The results of various measurements and evaluations are shown in Table 1.

### [Comparative Example 1]

### (Production of resin-impregnated Japanese cypress veneer (raw material for injection))

An impregnation solution was produced by dissolving polyamide 6I (weight-average molecular weight: 19,000) in HFIP with a concentration of 10 mass%. Delignified Japanese cypress veneer that had undergone adjustment of lignin content by the lignin adjustment method described above was immersed in the impregnation solution at 35°C for 7 days so as to exchange liquid inside of the Japanese cypress with the HFIP solution of polyamide 6I. The Japanese cypress veneer was removed from the impregnation solution, was dried at room temperature for 18 hours, and was then subjected to 2 days of hot-air drying at 60°C and then a further 5 days of drying under reduced pressure at 80°C to obtain resin-impregnated Japanese cypress veneer serving as a raw material for injection.

When the woody material content ratio in the obtained resin-impregnated Japanese cypress veneer was calculated from the mass of the resin-impregnated Japanese cypress veneer and the mass (estimated value) of the delignified Japanese cypress veneer in a dry state, which was calculated through conversion from the weight loss (6.8 mass%) of the Japanese cypress veneer due to delignification treatment, the woody material content ratio was 70 mass% (resin content ratio of 30 mass%).

The resin-impregnated Japanese cypress veneer maintained a woody sheet-like form with the same shape as the original Japanese cypress veneer and exhibited a structure with the resin impregnated into the structure of the Japanese cypress veneer.

### (Injection molding)

A vertical injection unit equipped with a capillary hole of 3 mm in diameter × 10 mm in length at the tip of a mold having a piston with an external diameter of 29.7 mm and a cylinder with an internal diameter of 30.0 mm and a gear mold having a cavity with a gear shape provided at a lower part of the injection unit were set up between heating plates of a press forming machine. The mold was heated through heat conduction from the heating plates until the surface temperature of the cylinder reached 150°C, and then a plurality of pieces of the resin-impregnated Japanese cypress veneer (approximately 10 g) were loaded into the cylinder, and the resin-impregnated Japanese cypress veneer was preheated for 5 minutes while slowly consolidating the resin-impregnated Japanese cypress veneer. Thereafter, a heating plate was lowered at a lowering rate of 10 mm/min so as to apply pressure to the resin-impregnated Japanese cypress veneer inside of the cylinder, fluidize the resin-impregnated Japanese cypress veneer, and cause the resin-impregnated Japanese cypress veneer to pass through the capillary and move into the mold cavity. Once all of the woody resin composition had moved into the mold cavity, the heating was stopped, and a shaped product inside of the mold was removed once the mold temperature was confirmed to have reached 100°C or lower. The piston pressure and the clamping pressure at this time were 212 MPa. In this molding, the pressure applied to the piston when the piston reached a position 4 mm from the tip of the mold was recorded as the pressure at the time of out-flow of the resin-impregnated Japanese cypress veneer in the cylinder (pressure during flow).

The results of various measurements and evaluations are shown in Table 1.

### [Comparative Example 2]

### (Production of resin-impregnated Japanese cypress veneer (raw material for injection))

Delignified Japanese cypress veneer in a dry state (water content: approximately 0%) that had undergone adjustment of lignin content by the lignin adjustment method described above was immersed in an aqueous solution obtained by diluting an acrylic resin emulsion (ARON T-50 produced by Toagosei Co., Ltd.; composition: sodium polyacrylate; weight-average molecular weight: 75,000; acrylic resin content (solid content concentration): 43 mass%) to a solid content concentration of 20 mass%. After 1 hour of depressurization at approximately 20°C, 18 hours of pressurization was performed so as to inject the acrylic resin emulsion into the Japanese cypress veneer. The Japanese cypress veneer was removed from the aqueous solution, was dried at room temperature for approximately 48 hours, and was then subjected to 48 hours of air drying at 35°C and finally 48 hours of drying under reduced pressure to obtain resin-impregnated Japanese cypress veneer serving as a raw material for injection.

The woody material content ratio in the obtained resin-impregnated Japanese cypress veneer, calculated in the same way as in Comparative Example 1, was 70 mass% (resin content ratio of 30 mass%).

The resin-impregnated Japanese cypress veneer maintained a woody sheet-like form with the same shape as the original Japanese cypress veneer and exhibited a structure with the resin impregnated into the structure of the Japanese cypress veneer.

### (Injection molding)

The obtained woody resin composition was used to perform injection molding in the same way as in Example 1 to produce a woody shaped product. The cylinder temperature was set as 170°C.

The results of various measurements and evaluations are shown in Table 1.

### [Comparative Example 3]

### (Production of resin-impregnated Japanese cypress veneer (raw material for injection))

Delignified Japanese cypress veneer that had undergone adjustment of lignin content by the lignin adjustment method described above was immersed in a 25% aqueous solution of PEG-20000 (weight-average molecular weight: 64,000) produced by FUJIFILM Wako Pure Chemical Corporation at room temperature for 1 week so as to exchange liquid inside of the Japanese cypress with the PEG aqueous solution. The Japanese cypress veneer was removed from the aqueous solution and was then subjected to humidity-controlled drying in an environment having a temperature of 20°C and a humidity of 60% RH to obtain resin-impregnated Japanese cypress veneer serving as a raw material for injection.

The woody material content ratio in the obtained resin-impregnated Japanese cypress veneer, calculated in the same way as in Comparative Example 1, was 60 mass% (resin content ratio of 40 mass%).

The resin-impregnated Japanese cypress veneer maintained a woody sheet-like form with the same shape as the original Japanese cypress veneer and exhibited a structure with the resin impregnated into the structure of the Japanese cypress veneer.

### (Injection molding)

The obtained woody resin composition was used to perform injection molding in the same way as in Example 1 to produce a woody shaped product. The cylinder temperature was set as 170°C.

The results of various measurements and evaluations are shown in Table 1.

**[Table 1]**

| | | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|
| | Thermoplastic resin | Type | PA6I | PA6I | PA6I | PA610 | PA66 | PA1010 | PA10I | PA10I | PA6I | Acrylic resin | Polyethylene glycol |
| | | Content (mass%) | 30 | 30 | 30 | 30 | 30 | 30 | 30 | 50 | 30 | 30 | 30 |
| | Woody material | Type | Japanese cypress | Japanese cypress | Japanese cypress | Japanese cypress | Japanese cypress | Japanese cypress | Japanese cypress | Japanese cypress | Japanese cypress | Japanese cypress | Japanese cypress |
| | | Content (mass%) | 70 | 70 | 70 | 70 | 70 | 70 | 70 | 50 | 70 | 70 | 70 |
| | | Lignin content treatment | Yes | No | Yes | Yes | Yes | Yes | Yes | No | Yes | Yes | Yes |
| Raw material for injection (woody resin composition) | Impregnation using monomer salt impregnation method | | Yes | Yes | No | Yes | Yes | Yes | Yes | Yes | No | No | No |
| | Production method of raw material for injection | | In-situ polymerization | In-situ polymerization | In-situ polymerization | In-situ polymerization | In-situ polymerization | In-situ polymerization | In-situ polymerization | In-situ polymerization | Solvent exchange | Solvent exchange | Solvent exchange |
| | Weight-average molecular weight Mn | | 16000 | 15000 | 25000 | 19000 | 23000 | 14000 | 18000 | 17000 | 19000 | 75000 | 64000 |
| | Form in which resin is present in raw material for injection | | Impregnated in woody material | Impregnated in woody material | Impregnated in woody material | Impregnated in woody material | Impregnated in woody material | Impregnated in woody material | Impregnated in woody material | Impregnated in woody material | Impregnated in woody material | Impregnated in woody material | Impregnated in woody material |
| | Presence of thermoplastic resin in wood cell wall/wood cell lumen | Before solvent extraction | Present | Present | Present | Present | Present | Present | Present | Present | Present | Absent | Absent |
| | | After solvent extraction | Present | Present | Present | Present | Present | Present | Present | Present | Absent | Absent | Absent |
| | | Signal A/signal B after solvent extraction (%) | 37 | 36 | 28 | 56 | 66 | 90 | 87 | 90 | 7 | - | - |
| | Pre-shaping water content (mass%) | | 5 | 5 | 5 | 5 | 5 | 5 | 5 | 5 | 5 | 12 | 10 |
| Production of shaped product | Shaping method | | Injection molding | Injection molding | Injection molding | Injection molding | Injection molding | Injection molding | Injection molding | Injection molding | Injection molding | Injection molding | Injection molding |
| | Pressure during flow (MPa) | | 95 | 90 | 110 | 95 | 95 | 85 | 95 | 90 | 100 | 200 | 140 |
| Evaluation | Color tone | | Brown | Light brown | Brown | Brown | Brown | Light brown | Light brown | Light brown | Light brown | Brown | Brown/bronze |
| | Commercial producibility | | 3 | 3 | 3 | 3 | 3 | 3 | 3 | 3 | 1 | 1 | 1 |
| | Mold transferability | | 5 | 5 | 5 | 4 | 4 | 4 | 5 | 5 | 5 | 2 | 1 |
| | Pencil hardness | | 5H | 5H | 5H | 4H | 4H | 5H | 5H | 5H | 4H | H | 4B |
| | Water resistance | | 3 | 3 | 3 | 3 | 3 | 3 | 3 | 3 | 3 | 2 | 2 |
| | Film formability | | 5 | 5 | 4 | 5 | 5 | 5 | 5 | 5 | 3 | 2 | 1 |

As indicated in Table 1, the shaped products of Examples 1 to 6, which were each produced by impregnating and polymerizing specific thermoplastic resin monomers in a woody material, displayed a light brown to brown color tone and had good commercial producibility, mold transferability, surface hardness, water resistance, and film formability.

On the other hand, in Comparative Example 1 where a shaped product was produced by impregnating an HFIP solution of PA6I into a woody material, it was necessary to use expensive HFIP as a solvent, which means that Comparative Example 1 is impractical and is inferior to Examples 1 to 6 in terms of commercial producibility.

Moreover, in Comparative Examples 2 and 3 where a shaped product was produced using a raw material for injection impregnated with PMMA or PEG, the color tone was a somewhat dim brown or brown/bronze, and commercial producibility, mold transferability, surface hardness, water resistance, and film formability were all inferior compared to in Examples 1 to 6.

### INDUSTRIAL APPLICABILITY

A woody shaped product that is obtained using the woody resin composition for flow forming according to the present disclosure has excellent color tone, commercial producibility, mold transferability, surface hardness, water resistance, and film formability, which means that the woody shaped product can suitably be used in various applications such as daily necessities, furniture and furnishings, building materials and construction components, housings for electrical products and audio equipment, automotive components, and so forth.

## Claims

1. A woody resin composition for flow forming comprising a woody material and a thermoplastic resin, wherein
the woody resin composition for flow forming has at least one shape selected from the group consisting of a sheet shape, a fiber shape, a pillar shape, and a spherical shape,
content of the woody material is not less than 50 mass% and less than 95 mass% and content of the thermoplastic resin is more than 5 mass% and not more than 50 mass% relative to total mass of the woody resin composition for flow forming,
the thermoplastic resin has, in a main chain skeleton of a repeating unit, at least one bond selected from the group consisting of an amide bond, an ester bond, an ether bond, and a thioether bond or has at least one end group selected from the group consisting of a carbonyl group, an acid anhydride group, an amide group, and a hydroxy group,
the thermoplastic resin is present in either or both of a wood cell wall and a wood cell lumen of the woody material in the woody resin composition for flow forming, and
the thermoplastic resin remains in either or both of a wood cell wall and a wood cell lumen of the woody material even after the woody resin composition for flow forming is subjected to extraction using a solvent that can dissolve the thermoplastic resin.

2. The woody resin composition for flow forming according to claim 1, wherein the thermoplastic resin includes at least one resin selected from the group consisting of a polyamide, a polyoxymethylene, a polyester, a polypropylene, a polyphenylene ether, and a polyarylene sulfide.

3. The woody resin composition for flow forming according to claim 1, wherein the thermoplastic resin includes a polyamide.

4. The woody resin composition for flow forming according to claim 1, wherein the thermoplastic resin includes an amorphous polyamide.

5. The woody resin composition for flow forming according to claim 1, wherein the woody material has a fiber shape with a fiber diameter D of 3.0 mm or less and a ratio L/D of fiber length L relative to the fiber diameter D of 3 or more.

6. The woody resin composition for flow forming according to claim 1, further comprising 1 mass% or more of water relative to the total mass of the woody resin composition for flow forming.

7. The woody resin composition for flow forming according to claim 1, wherein the woody material has a lignin content ratio of 3 mass% or more.

8. A method of producing a woody resin composition for flow forming comprising:
an impregnation step of bringing a thermoplastic resin monomer into contact with a woody material and impregnating the thermoplastic resin monomer into the woody material; and
a polymerization step of polymerizing the thermoplastic resin monomer that has been impregnated into the woody material and synthesizing a thermoplastic resin, wherein
the woody resin composition for flow forming that is obtained has at least one shape selected from the group consisting of a sheet shape, a fiber shape, a pillar shape, and a spherical shape,
content of the woody material is not less than 50 mass% and less than 95 mass% and content of the thermoplastic resin is more than 5 mass% and not more than 50 mass% relative to total mass of the woody resin composition for flow forming,
the thermoplastic resin has, in a main chain skeleton of a repeating unit, at least one bond selected from the group consisting of an amide bond, an ester bond, an ether bond, and a thioether bond or has at least one end group selected from the group consisting of a carbonyl group, an acid anhydride group, an amide group, and a hydroxy group,
the thermoplastic resin is present in either or both of a wood cell wall and a wood cell lumen of the woody material in the woody resin composition for flow forming, and
the thermoplastic resin remains in either or both of a wood cell wall and a wood cell lumen of the woody material even after the woody resin composition for flow forming is subjected to extraction using a solvent that can dissolve the thermoplastic resin.

9. The method of producing a woody resin composition for flow forming according to claim 8, further comprising an adjustment step of adjusting lignin content in the woody material before the impregnation step.

10. The method of producing a woody resin composition for flow forming according to claim 9, further comprising a moisturizing step of bringing the woody material into contact with water before the impregnation step, but after the adjustment step.

11. The method of producing a woody resin composition for flow forming according to claim 8, wherein the thermoplastic resin includes at least one resin selected from the group consisting of a polyamide, a polyoxymethylene, a polyester, a polypropylene, a polyphenylene ether, and a polyarylene sulfide.

12. The method of producing a woody resin composition for flow forming according to claim 8, wherein the thermoplastic resin includes a polyamide.

13. The method of producing a woody resin composition for flow forming according to claim 8, wherein the thermoplastic resin includes an amorphous polyamide.

14. The method of producing a woody resin composition for flow forming according to claim 8, wherein the woody material has a fiber shape with a fiber diameter D of 3.0 mm or less and a ratio L/D of fiber length L relative to the fiber diameter D of 3 or more.

15. The method of producing a woody resin composition for flow forming according to claim 8, wherein the woody resin composition for flow forming further contains 1 mass% or more of water relative to the total mass of the woody resin composition for flow forming.

16. The method of producing a woody resin composition for flow forming according to claim 8, wherein the woody material has a lignin content ratio of 3 mass% or more.

17. A woody shaped product obtained through shaping of a woody resin composition for flow forming that contains a woody material and a thermoplastic resin, wherein
content of the woody material is not less than 50 mass% and less than 95 mass% and content of the thermoplastic resin is more than 5 mass% and not more than 50 mass% relative to total mass of the woody shaped product,
the thermoplastic resin has, in a main chain skeleton of a repeating unit, at least one bond selected from the group consisting of an amide bond, an ester bond, an ether bond, and a thioether bond or has at least one end group selected from the group consisting of a carbonyl group, an acid anhydride group, an amide group, and a hydroxy group,
the thermoplastic resin is present in either or both of a wood cell wall and a wood cell lumen of the woody material in the woody shaped product, and
the thermoplastic resin remains in either or both of a wood cell wall and a wood cell lumen of the woody material even after the woody shaped product is subjected to extraction using a solvent that can dissolve the thermoplastic resin.

18. The woody shaped product according to claim 17, wherein the woody shaped product is obtained through injection molding of the woody resin composition for flow forming.

19. The woody shaped product according to claim 17, wherein the woody shaped product is obtained through press forming of the woody resin composition for flow forming.
